# EUROPEAN PATENT APPLICATION

(11) **EP 4 701 254 A1**
(43) Date of publication of application: **25.02.2026**
(21) Application number: 24792918.5
(22) Date of filing: 09.04.2024
(51) Int. Cl.: H04W 12/069, H04W 12/08, H04L 5/00, H04W 84/12, H04W 88/08

(54) **METHOD AND DEVICE FOR PRIOR SECURE CONNECTION IN WLAN SYSTEM**

(30) Priority: 18.04.2023 KR 20230050927
(71) Applicant: LG Electronics Inc., Yeongdeungpo-gu Seoul 07336 (KR)
(72) Inventor: BAEK, Sunhee, Seoul 06772 (KR); CHUN, Jinyoung, Seoul 06772 (KR); CHOI, Jinsoo, Seoul 06772 (KR); JANG, Insun, Seoul 06772 (KR)
(74) Representative: Plasseraud IP
(86) International application number: PCT/KR2024/004702
(87) International publication number: WO 2024/219732

(57) **Abstract**

The present invention relates to a method and device for a prior secure connection in a WLAN system. A method performed by a first station (STA) in a WLAN system according to an embodiment of the present disclosure may comprise the steps of: transmitting, to a second STA, a first message including a pre-association security negotiation (PASN) parameter element including an identifier for the first STA; and receiving, from the second STA, a second message transmitted on the basis of the identifier satisfying a prescribed condition.

## Description

### [TECHNICAL FIELD]

The present disclosure relates to a prior secure connection method and device in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical problem of the present disclosure is to provide a prior secure connection method and device in a WLAN system.

An additional technical problem of the present disclosure is to provide a method and a device for establishing a prior secure connection with other APs while being associated with an AP in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a WLAN system according to an aspect of the present disclosure may include transmitting, to a second STA, a first message including a pre-association security negotiation (PASN) parameter element, wherein the PASN parameter element includes an identifier for the first STA; and receiving, from the second STA, a second message transmitted based on the identifier satisfying a predetermined condition.

A method performed by a second station (STA) in a WLAN system according to an additional aspect of the present disclosure may include receiving, from a first STA, a first message including a pre-association security negotiation (PASN) parameter element, wherein the PASN parameter element includes an identifier for the first STA; and based on the identifier satisfying a predetermined condition, transmitting a second message to the first STA.

### [Technical Effects]

According to the present disclosure, a prior secure connection method and device in a WLAN system may be provided.

According to the present disclosure, a method and a device for establishing a prior secure connection with other APs while being associated with an AP in a WLAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing various transmission or reception techniques in a MAP environment to which the present disclosure may be applied
FIG. 9 is a diagram for describing a 4-way handshaking procedure to which the present disclosure may be applied.
FIG. 10 is a diagram for describing a BSS transition in the existing WLAN system.
FIG. 11 is a diagram for describing an example of a PASN authentication procedure to which the present disclosure may be applied.
FIG. 12 is a diagram representing an example of the format of a PASN parameter element to which the present disclosure may be applied.
FIG. 13 is a diagram for describing the operations of an STA and APs within an MAP according to the present disclosure.
FIG. 14 is a diagram for describing the operation of the first STA according to the present disclosure.
FIG. 15 is a diagram for describing the operation of the second STA according to the present disclosure.
FIG. 16 is a diagram representing examples of the format of a modified PASN parameter element according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

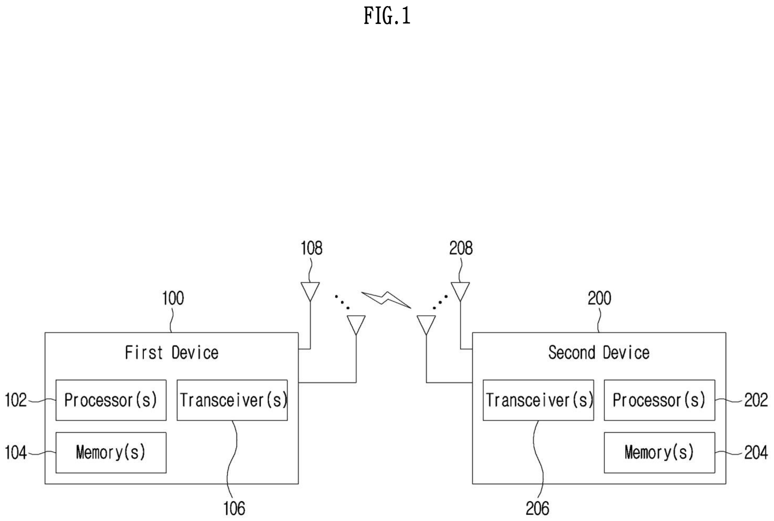

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

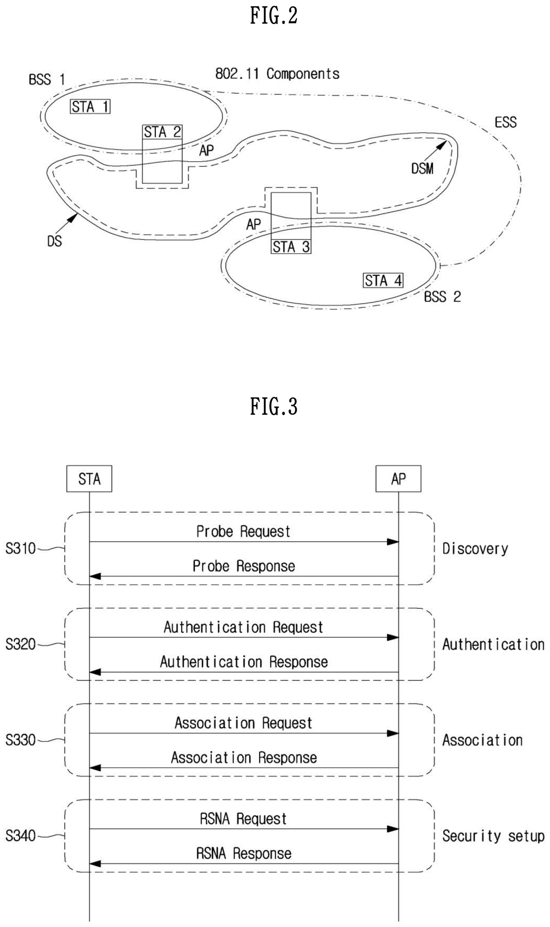

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

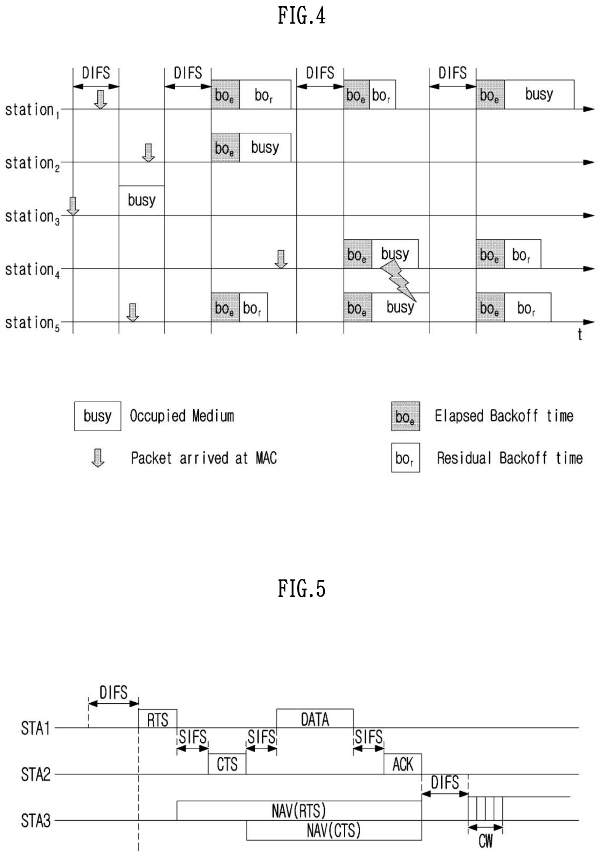

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining backoff time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

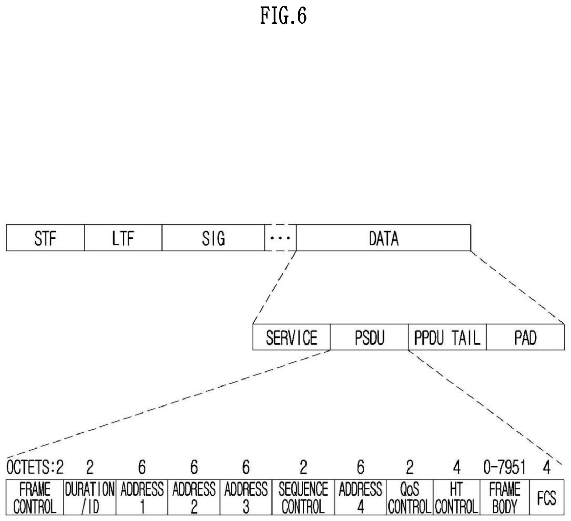

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

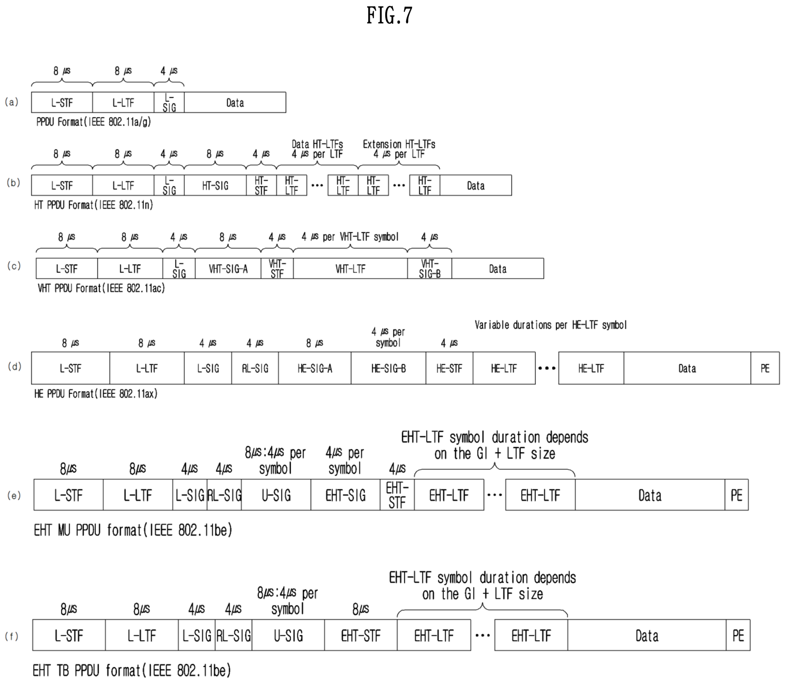

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.1 1n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multiple Access Point (MAP) Operation

Hereinafter, examples of the present disclosure for a multi-access point (MAP) operation will be described.

A MAP operation may be defined as an operation between a master AP (or a sharing AP) and a slave AP (or a shared AP).

A master AP plays a role of initiating and controlling a MAP operation for transmission or reception between multiple APs. A master AP groups a slave AP and manages a link with slave APs to share information between slave APs. A master AP manages information of a BSS configured with slave APs and information of STAs associated with a corresponding BSS.

A slave AP may be associated with a master AP and share control information, management information and data traffic with each other. A slave AP performs a basic function of an AP which may establish a BSS in a wireless LAN in the same way.

A STA in a MAP operation may be associated with a slave AP or a master AP to configure a BSS.

In a MAP environment, a master AP and a slave AP may perform direct transmission or reception with each other. A master AP and a STA may not be able to perform direct transmission or reception with each other. A slave AP (e.g., a slave AP associated with a STA) may perform direct transmission or reception with a STA. One of slave APs may become a master AP.

A MAP operation is a technique in which at least one AP transmits and receives information to at least one STA. For example, a C-TDMA (coordinated-time division multiple access) technique which divides allocation between APs on a time axis, a C-OFDMA (coordinated-orthogonal frequency division multiple access) technique which divides allocation between APs on a frequency axis, a C-SR (coordinated-spatial reuse) technique which uses spatial reuse and others may be applied for a MAP operation. Alternatively, a coordinated beamforming (C-BF) or joint beamforming technique which performs simultaneous transmission or reception in cooperation may be also applied for a MAP operation.

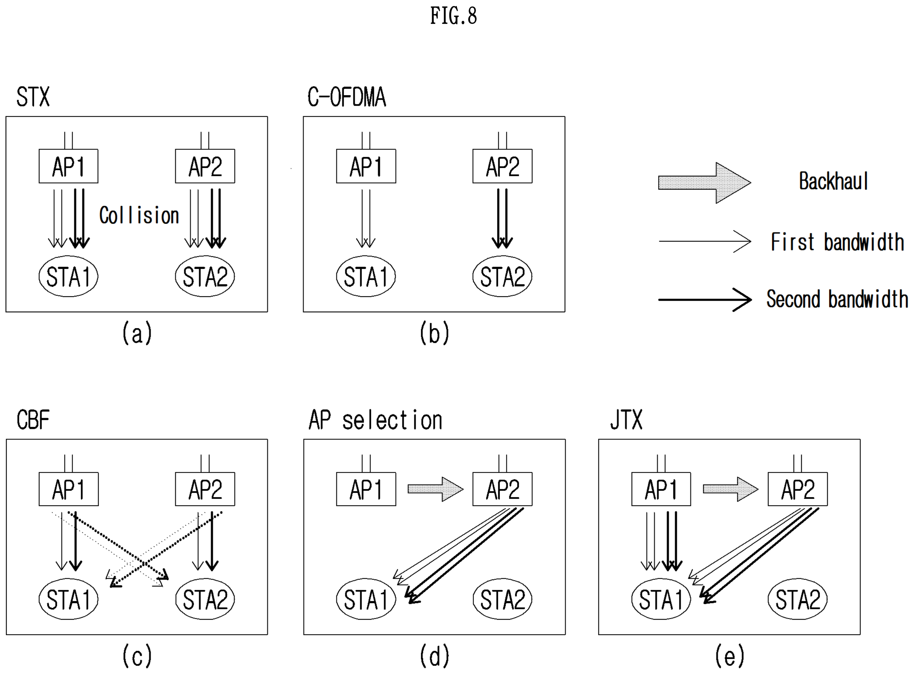

FIG. 8 is a diagram for describing various transmission or reception techniques in a MAP environment to which the present disclosure may be applied.

When a BSS AP performs transmission to a BSS STA like an existing method, it may be referred to as single transmission (STX). In STX, there is a problem that the performance of transmission or reception for users/STAs positioned at a cell edge is reduced due to interference with an adjacent AP. For example, as in FIG. 8(a), when AP1 and AP2 perform transmission to STA1 and STA2 at the same time in the same frequency bandwidth, a collision may occur on a wireless medium.

In a MAP technique, performance may be improved through a method for reducing inter-symbol interference (ISI) through cooperation between neighboring APs or performing transmission together. For example, in a C-OFDMA method of FIG. 8(b), AP1 may perform transmission to STA1 in a first bandwidth and AP2 may perform transmission to STA2 in a second bandwidth at the same time, avoiding interference. An example in FIG. 8(c) shows cooperative beamforming or nulling technique in which AP1 nulls interference to AP2 and/or STA2 while performing transmission to STA1 and AP2 nulls interference to AP1 and/or STA1 while performing transmission to STA2. FIG. 8(d) shows an AP selection method in which an AP with a good channel condition among the adjacent APs performs transmission. As in an example of FIG. 8(e), joint transmission (JTX) or joint reception (JRX) in which multiple APs cooperate to perform transmission or reception simultaneously may be applied, and further, joint MU-MIMO may be supported.

### RSN Operation

As described by referring to FIG. 3, an authentication process after a discovery process between a STA and an AP may be performed in an open system manner, and an association process may be performed. This process may be referred to as step 0 for searching for whether to support a robust security network (RSN) and establishing authentication and association.

When step 0 is successfully completed, step 1 for securing a pairwise master key (PMK) and user authentication by IEEE 802.1X/EAP (extensible authentication protocol) or a pre-shared key (PSK) may be performed. A mutual authentication method applied here may include 802.1X/EAP, PSK or SAE (simultaneous authentication of equals), etc. For example, for a 802.1X/EAP authentication method, a PMK may be generated from a master session key (MSK) after authentication between a STA and a remote authentication dial-in user service (RADIUS). For a user authentication method by a PSK, an AP and a STA may directly set a PMK in the same way as a PSK. For a user authentication by SAE, an AP and a STA may directly set a PMK by using the operation value of mutual authentication and authentication process through a SAE authentication process.

Following step 1, step 2 for confirming whether the other party has the same PMK by using an EAPoL-Key frame and generating and sharing an encryption key may be performed. Step 2 may include the process of mutually confirming PMK generation through 4-way handshaking and generating and delivering a group key (e.g., a group temporal key (GTK)). A pairwise transient key (PTK), a key confirmation key (KCK), a key encryption key (KEK), and a temporal key (TK) may be generated through 4-way handshaking.

Specifically, a PMK may be generated from a MSK in step 1, and a PTK may be generated from a PMK in step 2. Here, a PTK is set separately as a KCK, a KEK and a TK. A GTK may be generated from an AP and delivered to a STA. When an AP wants to generate a new GTK, it may perform handshaking with a STA and deliver a new GTK to a STA.

In order to confirm whether a STA and an AP have the same PMK, for 802.1X/EAP, the same MSK is set between a STA and an authentication server (AS) by a user authentication result between a STA and an AS, and an AS delivers a corresponding MSK to an AP. A STA and an AP may mutually confirm whether to have a PMK, a symmetric key generated from a MSK, through 4-way handshaking. For a PSK, an authentication procedure may be replaced by mutually verifying whether a PMK generated from a PSK set in advance between an AP and a STA is secured through 4-way handshaking. For SAE, a PMK set in advance between an AP and a STA may be mutually verified through 4-way handshaking.

It may also be confirmed whether a STA and an AP have the same PMK by mutually verifying that the same PTK was generated. For example, it may also be confirmed whether a PMK is secured through message 2 and message 3 of 4-way handshaking. Specifically, in message 2, a STA may transmit the KCK of a PTK it generated to an AP by including it in a key MIC field. In message 3, an AP may transmit the KCK of a PTK it generated to a STA by including it in a key MIC field. Through this, a STA (an AP) may verify that an AP (a STA) generated the same PTK as its PTK and confirm that an AP (a STA) has the same PMK as its PMK. Meanwhile, in message 1, the value of a key MIC field may be set as 0, and in message 4, a KCK value may be included in a key MIC field.

In this way, a security key for encrypting data to be transmitted and received between a STA and an AP may be generated in step 2. In a RSN, a different security key is generated for each STA associated with an AP, and another security key is generated when a STA is re-associated with another AP.

Based on a TK generated as a result of 4-way handshaking in step 2, data encryption may be performed by using a temporal key integrity protocol (TKIP), a cipher-block chaining message authentication code protocol (CCMP), a Galois/Counter Mode protocol (GCMP), etc., which may be referred to as step 3.

The above-described MSK, PSK, PMK, PTK, KCK, KEK and TK correspond to a pairwise key, i.e., a pairing key between an AP and a STA. Unlike a pairwise key, a group key may be generated based on a group master key (GMK) so that an AP generates a security key for a group-addressed frame, such as a beacon frame. A GMK is randomly set by an AP. A group temporal key (GTK) is generated from a GMK by a pseudorandom function (PRF) function, and corresponds to a unidirectional group key from an AP to a STA.

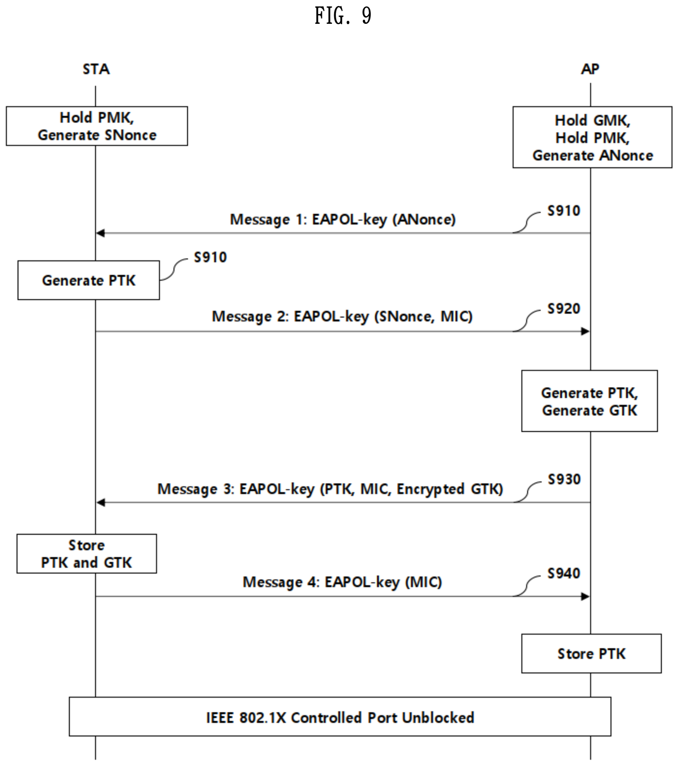

FIG. 9 is a diagram for describing a 4-way handshaking procedure to which the present disclosure may be applied.

A STA corresponds to a supplicant, and an AP corresponds to an authenticator. 4-way handshaking may be performed to generate and confirm a PTK and a GTK between an AP and a STA when a STA has or knows a PMK and an AP has or knows a PMK and a GMK.

ANonce and SNonce correspond to a factor used in a PRF function used to generate a PTK. ANonce may correspond to a random number generated by an access point (i.e., an authenticator). SNonce may correspond to a random number generated by a STA (i.e., a supplicant). A PRF function may correspond to a function that generates a PTK based on, for example, a PMK, ANonce, SNonce, the MAC address of a supplicant and the MAC address of an authenticator.

Message 1 in S910 is transmitted from an AP to a STA in a unicast manner, and an EAPOL-key frame may include ANonce information. When an AP generates a PMK, PMKID may be included in the key data field of an EAPOL-key frame. A STA may generate a PTK based on information received from an AP and may generate a KCK, a KEK and a TK based on a PKT.

Message 2 in S920 is transmitted from a STA to an AP in a unicast manner, and an EAPOL-key frame may include SNonce information and a key message integrity code (MIC). For example, the key MIC of message 2 may have a value based on a KCK generated by a STA. An AP may generate a PTK based on information received from a STA and may generate a KCK, a KEK and a TK based on a PTK. An AP may verify whether an AP and a STA generated the same PTK based on whether the KCK value of a PTK generated based on a value included in message 2 and a KCK value related to a key MIC value included in message 2 are the same. In addition, an AP may generate a GTK, if necessary. A GTK may be generated by an AP from a GMK without the participation of a STA.

Message 3 in S930 is transmitted from an AP to a STA in a unicast manner, and an EAPOL-key frame may include a PTK, a MIC and encrypted GTK information. The encrypted GTK of message 3 may be generated based on a KEK generated by an AP and may be included in a key data field. A STA may store a PTK in PKT-SA (PKT-Security Association) and a GTK in GTK-SA.

Message 4 in S940 is transmitted from a STA to an AP in a unicast manner, and an EAPOL-key frame may include MIC information. When verification is completed through MIC, an AP may store a PTK in PKT-SA and a GTK in GTK-SA.

When 4-way handshaking is successfully completed in this way, a virtual control port that blocks all traffic may be unblocked and encrypted traffic may be transmitted and received. Afterwards, all unicast traffic may be encrypted by a PTK, and all multicast/broadcast traffic may be encrypted by a GTK.

### A fast BSS transition (FT) operation

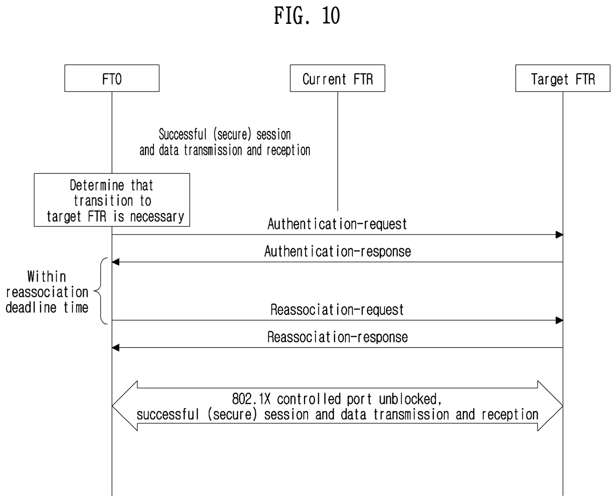

FIG. 10 is a diagram for describing a BSS transition in the existing WLAN system.

For a fast BSS transition (FT) method corresponding to the typical example of a BSS transition (or roaming), various processes such as an authentication request/response, a re-association request/response, etc. are required between a FT originator (FTO) (or a non-AP STA) and a target FTR in order to move from a current FT responder (FTR) (or a current AP) to a target FTR (or a target AP). In other words, in the existing BSS transition method, a re-association process is required on the same mobility domain.

In addition, after a process illustrated in FIG. 10, various operation parameters such as an agreement related to BlockAck (BA) or Service Classification Service (SCS), etc., a SN, an EDCA function (EDCAF) parameter, etc. are reset. Accordingly, a FTO must perform a variety of and a large number of frame exchanges for FT and must perform an agreement/a configuration with a new FTR again. Accordingly, the complexity and overhead of a FT process are high and data loss may occur during a FT process.

In the existing authentication method, a STA that determines that roaming to a new AP is necessary must exchange a (re-)association request/response with a new AP, and may obtain a MSK after successfully completing a STA's authentication for a new AP. In other words, a STA must newly start RSN authentication and key generation processes described by referring to FIG. 9 from the beginning with a new AP.

In a FT method to refine this, obtaining a MSK during an authentication process may be completed before a STA performs roaming. For example, when a STA enters a mobility domain (MD), an initial authentication procedure is performed only once, and an encryption method derived from an initial authentication procedure is used within the same MD (i.e., entities having the same MD identification information (MDID)), so roaming time may be shortened and the load of an authentication server (AS) may be reduced.

In addition, a FT key hierarchy may be supported to support a FT method. The highest level of key holder (KH) may correspond to R1KH and S1KH, and a low level of key holder may correspond to ROKH and S0KH. R1KH and S1KH may have the access right to ROKH and S0KH. ROKH and R1KH belong to the station management entity (SME) RSNA key management of an AP, and may be referred to as an authenticator key holder. S0KH and S1KH belong to the SME RSNA key management of a STA, and may be referred to as a supplicant key holder. ROKH and S0KH may be responsible for calculating PMK-R0 and PMK-R1 of an AP and a STA, respectively. R1KH and S1KH may be responsible for calculating PTK of an AP and a STA, respectively.

When authentication is successfully performed in a FT initial mobility domain association method, ROKH of an AP (e.g., a current FTR) may receive a PMK and related parameters. Here, when a KH belonging to the same MDID as a STA to be associated already exists, PMK-R0 security association (SA) and PMK-R1 SA where ROKH exists may be deleted, and PMK-R0 and PMK-R1 may be calculated based on a newly received PMK. Afterwards, S1KH of a STA and R1KH of an AP may generate a TK and a GTK through 4-way handshaking and store and manage them in each SA (e.g., PTKSA, GTKSA). Accordingly, an IEEE 802.1X controlled port between a STA and an AP may be unblocked and an encrypted message may be transmitted and received.

### Pre-association Security Negotiation (PASN)

Pre-association security negotiation (PASN) authentication is used in an RSN for an infrastructure BSS when it is based on pairwise master key security association (PMKSA) established by another RSN authentication protocol. Otherwise, mutual authentication is not guaranteed, so it may be used as a non-RSN protocol in an infrastructure BSS. By establishing PTKSA using an authentication frame, PASN authentication may protect a management frame without association.

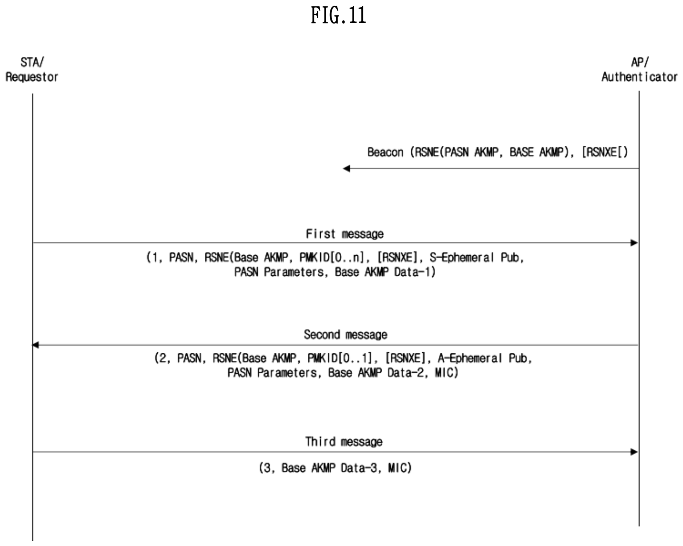

FIG. 11 is a diagram for describing an example of a PASN authentication procedure to which the present disclosure may be applied.

The process of establishing PTKSA and a corresponding shared key between an AP and an STA with a PASN capability may be performed through three-message authentication frame exchange. For example, the value of the authentication algorithm number field of three authentication frames may be set as 7, and a corresponding authentication transaction sequence number field may be set as 1, 2 and 3 in each message.

An AP with a PASN capability may include PASN authentication and key management protocol (AKMP)-related information as part of RSNE in a beacon (or probe response) frame.

A non-AP STA may initiate PASN authentication with an AP with a PASN capability by using the first PASN frame (or the first message). For example, through the first PASN frame, an RSNE may be provided that includes a base AKMP (e.g., AKMP related to already existing PMKSA) parameter including a PMKID list, a STA's ephemeral public key, a PASN parameter, additional base AKMP specific data, etc.

An AP may process the first PASN frame according to a base AKMP and respond with the second PASN frame (or the second message). When the processing of the first PASN frame is successful, an AP may include an RSNE including a selected base AKMP parameter, a selected PMKID, an AP's ephemeral public key, a PASN parameter, additional base AKMP specific data, etc. in the second PASN frame. The second PASN frame may also be integrity protected by an MIC using a KCK. When the processing of the first frame fails, an AP may return a frame including a status code field representing a corresponding status and not including additional data, or may drop the first frame without a response.

An STA may process the second PASN frame according to a base AKMP and respond with the third frame (or the third message). When the processing of the second PASN frame is successful, an STA may respond with the third frame integrity-protected by an MIC using a KCK. When the processing of the second PASN frame is not successful, it may return a frame including a status code representing a corresponding status or may drop the second frame without a response.

As a result of a successful PASN exchange, PTKSA using an ephemeral key and a PMK may be established from a base AKMP.

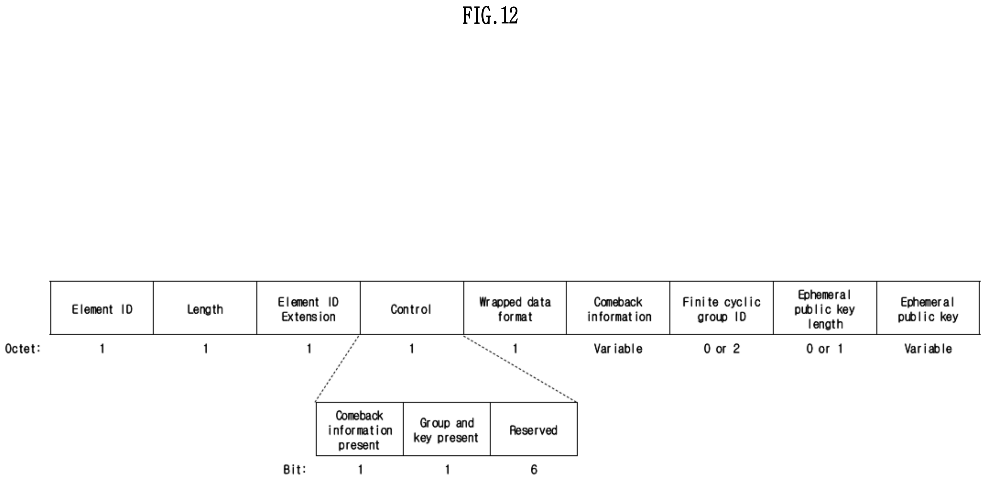

FIG. 12 is a diagram representing an example of the format of a PASN parameter element to which the present disclosure may be applied.

An element ID field and an element ID extension field may be set as a value (e.g., 255 and 100, respectively) representing that a corresponding element is a PASN parameter element. A length field represents the length of fields subsequent to a length field.

A control field may include a comeback information present subfield representing whether a comeback information field exists within a PASN parameter element. In addition, a control field may include a finite cyclic group ID field, an ephemeral public key length field and a group and key present subfield representing whether an ephemeral public key field exists within a PASN parameter element.

A wrapped data format field may indicate the data format of a wrapped data field included with a PASN parameter element (e.g., no wrapped data, fast BSS transition (FT) wrapped data, fast initial link setup (FILS) shared key authentication without perfect forward secrecy (PFS) wrapped data, SAE wrapped data, etc.).

A comeback information field may exist only when a comeback information present subfield within a control field is set as 1. A comeback information field may include a comeback after subfield, a cookie length subfield and a cookie subfield.

A finite cyclic group ID field, an ephemeral public key length field and an ephemeral public key field may exist only when a group and key present subfield within a control field is set as 1. A finite cyclic group ID field may indicate a group used in PASN authentication. An ephemeral public key length may represent the length of an ephemeral public key field in an octet unit, and an ephemeral public key field may include a public key (in a compressed or uncompressed format).

### Prior Secure Connection

The present disclosure relates to a secure connection operation that must be performed before an STA associated with an AP within an MAP performs a signaling operation to obtain channel information from another non-associated AP within an MAP, in order to support various multi-AP (MAP) operations.

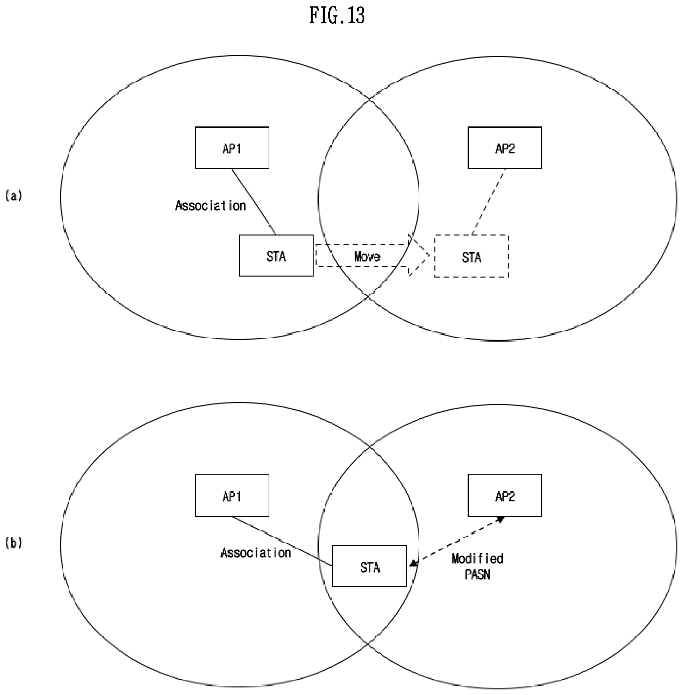

FIG. 13 is a diagram for describing the operations of an STA and APs within an MAP according to the present disclosure.

In FIGS. 13(a) and 13(b), AP1 and AP2 may correspond to a slave AP (or a shared AP) subordinate to the same master AP (or sharing AP).

In the example of FIG. 13(b), it may be assumed that an STA moves to the area (or BSS) of AP2 while being associated with AP1. In this case, an STA may disconnect an association with AP1 and establish an association (or re-association) with AP2. Here, before establishing an association with AP1, an STA may collect channel information that may transmit and receive data in advance (i.e., before establishing an association) when establishing an association with AP2 to smoothly perform movement from AP1 to AP2. Specifically, an STA plans to establish an association with AP1 at a current position, but may obtain/collect channel information in advance with another AP (i.e., AP2) close to an STA's moving route and use corresponding channel information when an STA moves from AP1 to AP2.

When an STA already establishes an association with an AP, it may not perform data transmission and reception with another AP without disconnecting it. Accordingly, in the present disclosure, when an AP with which an STA establishes an association (hereinafter, a BSS AP) and an AP from which an STA requests channel information (hereinafter, an OBSS AP) belong to the same MAP set, a corresponding STA may establish a secure connection by using an unassociated OBSS AP and the above-described PASN and perform data transmission and reception. Unlike an existing PASN which is performed to enable an STA that does not establish an association with any AP (or regardless of an association with an arbitrary AP) to establish a secure connection with an AP, the present disclosure may define and apply a modified PASN method to enable an STA that currently establishes an association with an AP to establish a secure connection with another AP.

As shown in the example in FIG. 13(b), it is assumed that an STA establishes an association with AP1 and does not establish an association with AP2. In this case, to obtain/collect information such as AP2's channel information, etc., an STA may establish a pre-association secure connection with AP2. Here, a secure connection may correspond to a state in which before an STA and an AP finally establish an association and may transmit and receive class 3 frames (e.g., a control frame, a management frame, a data frame, etc.), the transmission and reception of class 1 frames (e.g., a control frame such as RTS/CTS, etc., and a management frame such as a probe request/response, a beacon, authentication, etc.) and class 2 frames (e.g., a management frame such as an association request/response, etc.) is possible but the transmission and reception of class 3 frames including a data frame is not allowed. Accordingly, although an STA may receive channel information defined in the MAC from AP2 (or an OBSS AP) through a beacon frame, etc., but may not obtain channel information defined in a PHY for data transmission and reception, a modified PASN procedure according to the present disclosure may be applied to verify whether it is an STA suitable for security before AP2 (an OBSS AP) provides an STA with channel information defined in a PHY.

The present disclosure describes various examples of a modified PASN operation for forming a prior secure connection (or a prior secure channel) between a non-associated AP (OBSS AP) and an STA associated with an AP (BSS AP) other than an OBSS AP (hereinafter, a BSS STA) prior to the movement of an STA between APs. For example, APs of the present disclosure may be slave/shared APs belonging to one MAP environment, but are not limited thereto.

For example, it may be assumed that APs support the following matters:
- PASN authentication algorithm (e.g., the value of an authentication algorithm number field is set as 7);
- PASN authentication activation (e.g., the value of a dot11NoAuthPASNActived parameter is set as true);
- Scalar operation (e.g., as one of the arithmetic operations utilized in SAE authentication, an operation for calculating another element by taking an integer and an element);
- OBSS AID (OAID) (e.g., as the AID of an STA allocated at the request of an STA to an associated AP (BSS AP), the identifier of an STA that may be used for data transmission and reception with another unassociated AP (OBSS AP).

As described above, a PASN process may define a detailed authentication process differently according to a base AKMP (e.g., none, FILS, SAE, FT, etc.). In the present disclosure, it may be assumed that a base AKMP may have a value of none (e.g., the value of an AKMP suite selector 00-0F-AC may have a value of 0 (i.e., 00-0F-AC:0), may have a value of SAE authentication (e.g., 00-0F-AC:8) or may have a value of FT authentication (e.g., 00-0F-AC:9)). Here, as described above, the value of an authentication algorithm field within an authentication frame (e.g., the first/second/third message of FIG. 11) is set as a value of 7 (i.e., a PASN authentication algorithm), which may be applied in the same manner.

According to the present disclosure, instead of using an AID for an AP to recognize non-associated neighbor STA(s) (i.e., verify whether they are a target for data transmission and reception), an OBSS AID newly defined in the present disclosure may be used. In other words, similar to a manner in which data is transmitted and received between a BSS AP and a BSS STA by allocating and utilizing an STA ID as an AID, it may be negotiated in advance to allocate and use an STA ID between an OBSS AP and a BSS STA as a new identifier called an OAID. For example, AP1 (a BSS AP) may provide an OAID for AP2 to an STA (a BSS STA) in advance, and an OAID provided by AP1 to an STA may be determined by AP2 (an OBSS AP) (e.g., AP2 (an OBSS AP) may determine a value distinct from AID(s) allocated to its other associated STA(s) as an OAID).

However, the scope of the present disclosure is not limited by a term of OBSS AID (OAID), and may include any form of identification information of an STA that allows an OBSS AP to identify a BSS STA. In other words, OAID is used as a term representing any form of identification information of an STA as described above.

Hereinafter, specific examples of the present disclosure for a modified PASN operation based on an OAID are described. The names and values of a field, an element, a parameter, a key, etc. proposed in the present disclosure are exemplary and are not limited to those names and values. In addition, unless otherwise specified, a STA may be an AP STA or a non-AP STA.

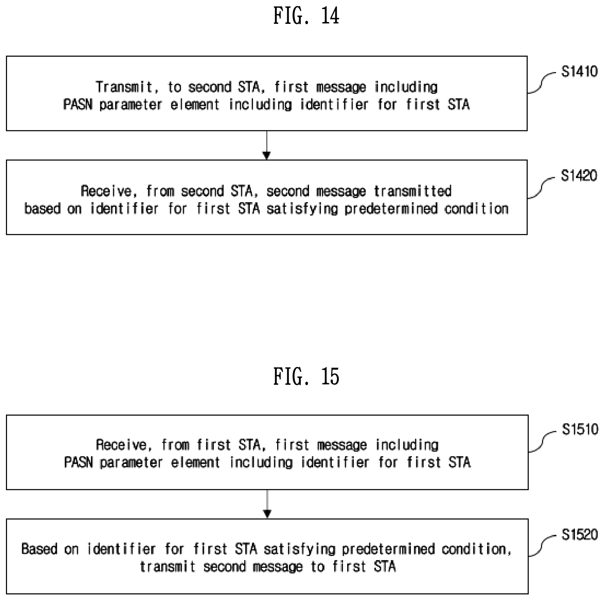

FIG. 14 is a diagram for describing the operation of the first STA according to the present disclosure.

In the examples of FIGS. 14 and 15, the first STA may correspond to a non-AP STA that establishes an (initial) association with the third STA. The third STA may correspond to an AP STA (e.g., a master/sharing AP or the first slave/shared AP) (within an MAP set) that establishes an (initial) association with the first STA. The second STA may correspond to another AP (e.g., the second slave/shared AP or a master/sharing AP) (within the same MAP set) that does not establish an association with the first STA.

In S1410, the first STA may transmit the first message including a PASN parameter element including an identifier for the first STA to the second STA.

For example, an identifier for the first STA may correspond to an OAID in the above-described examples.

For example, an identifier for the first STA may be included in the ephemeral public key field of a PASN parameter element. In this case, the ephemeral public key field of a PASN parameter element may include a value in which an ephemeral public key value and an identifier value for the first STA are concatenated. In addition, the ephemeral public key length field of a PASN parameter element may be set as a value corresponding to the length of an ephemeral public key.

Additionally or alternatively, the control field of a PASN parameter element may include a subfield indicating whether an identifier for the first STA is included in an ephemeral public key field.

Additionally or alternatively, an identifier for the first STA may be included in an identifier field (e.g., an OAID field) other than the ephemeral public key field of a PASN parameter element. In this case, the control field of a PASN parameter element may include a subfield (e.g., an OAID present subfield) indicating whether an identifier field for the first STA exists.

For example, an identifier for the first STA may be provided to the first STA in advance through the third STA with which the first STA is associated. For example, an identifier for the first STA may be allocated by the second STA.

In S1420, the first STA may receive from the second STA the second message which is transmitted based on an identifier satisfying a predetermined condition.

For example, a predetermined condition may include that an identifier for the first STA is related to an MAP to which the second STA belongs. For example, when an identifier for the first STA corresponds to an identifier allocated by an OBSS AP belonging to an MAP to support a modified PASN operation or corresponds to an identifier indicating an MAP, it may be determined that a predetermined condition is satisfied.

The first STA receiving the second message may transmit the third message (e.g., the third message of FIG. 11) to the second STA.

After the exchange of the first and second messages (and additionally the transmission and reception of the third message) is successfully completed, (data) transmission and reception between the first STA and the second STA may be performed while the first STA and the second STA are not associated. Accordingly, the first STA may request channel information, etc. from the second STA, and the second STA may respond thereto and provide channel information, etc. to the first STA.

A PTK related to (data) transmission and reception between the first STA and the second STA may be derived based on an identifier for the first STA. For example, a PMK on which a PTK is based may be composed of bits of a predetermined length including at least one 0 (zero) and an identifier value. Alternatively, a PMK on which a PTK is based may be composed of bits of a predetermined length including at least one 0 (zero) and an identifier value. Alternatively, a PMK on which a PTK is based may be composed of bits of a predetermined length including the pairwise master key and identifier value of a base AKMP.

A method described in the example of FIG. 14 may be performed by a first device 100 in FIG. 1. For example, at least one processor 102 of the first device 100 of FIG. 1 may be configured to generate a PASN parameter element including an identifier for the first STA, transmit the first message including a corresponding PASN element to the second STA through at least one transceiver, and receive from the second STA the second message transmitted based on an identifier for the first STA satisfying a predetermined condition through at least one transceiver. Furthermore, at least one memory 104 of a first device 100 may store instructions for performing a method described in the example of FIG. 14 or examples described below when executed by at least one processor 102.

FIG. 15 is a diagram for describing the operation of the second STA according to the present disclosure.

In S1510, the second STA may receive the first message including a PASN parameter element including an identifier for the first STA from the first STA.

In S1520, the second STA may transmit the second message to the first STA based on an identifier for the first STA satisfying a predetermined condition.

The description of an identifier for the first STA, a PASN parameter element including this and a PTK based thereon is the same as described in FIG. 14, so an overlapping description is omitted.

A method described in the example of FIG. 15 may be performed by the second device 200 of FIG. 1. For example, at least one processor 202 of the second device 200 of FIG. 1 may be configured to receive the first message including a PASN parameter element from the first STA through the at least one transceiver, detect/obtain an identifier for the first STA included in a PASN parameter element, and transmit the second message to the first STA through at least one transceiver based on an identifier for the first STA satisfying a predetermined condition. Furthermore, at least one memory 204 of a second device 200 may store instructions for performing a method described in the example of FIG. 15 or examples described below when executed by at least one processor 202.

The examples of FIGS. 14 and 15 may correspond to some of the various examples of the present disclosure. Hereinafter, various examples of the present disclosure including the example of FIGS. 14 and 15 will be described in more detail.

In embodiments described below, a modified PASN operation within an MAP is described as a representative example, but embodiments described below may also be applied equally to a set of STAs in other scopes to which a modified PASN operation may be applied without being limited to an MAP. In addition, in embodiments described below, a security key name such as PMK, etc. is described as a representative example, but embodiments described below may also be applied equally to a security key under other names used for a corresponding function/role.

### Embodiment 1

The present disclosure relates to a PASN authentication process based on an OAID.

For example, an OAID may be additionally included within a PASN parameter element including ephemeral public key information. For example, a PASN parameter element may be included in the first message and/or the second message during a 3-message authentication frame exchange procedure described by referring to FIG. 11. In this way, an OAID defined in the present disclosure may be included in the first message and/or the second message, and based thereon, an OAID-based PASN authentication procedure within an MAP may be performed.

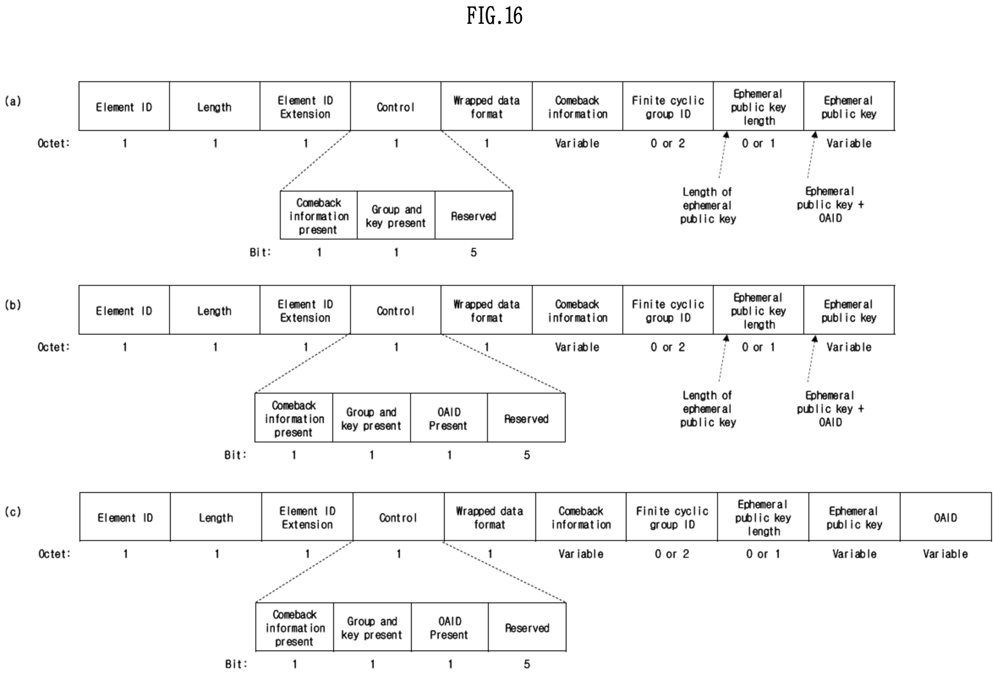

FIG. 16 is a diagram representing examples of the format of a modified PASN parameter element according to the present disclosure. Hereinafter, specific examples of the present disclosure will be described by referring to the examples of FIG. 16.

### Embodiment 1-1

This embodiment relates to a method for including an OAID in an existing field within a PASN parameter element (see FIG. 12). In addition, OAID information may be included in a PASN parameter element without defining a new field.

As shown in the example of FIG. 16(a), a transmitter (e.g., a BSS STA) may set a value within an ephemeral public key field within a PASN parameter element included in an authentication frame as a value resulting from the concatenation of an ephemeral public key value and an OAID value according to the existing method. In this case, the value of an ephemeral public key length field may be set as a value corresponding to the length of an ephemeral public key according to the existing method (i.e., the length of an ephemeral public key alone before an OAID is concatenated).

Additionally or alternatively, when an OAID is included in an ephemeral public key field, the value of the group and key present subfield of a control field may be set as a value representing that an ephemeral public key field exists (e.g., 1). For example, for both a case in which an ephemeral public key is included in an authentication frame and a case in which an ephemeral public key is not included in an authentication frame, when an OAID is included in an authentication frame, the value of the group and key present subfield of a control field may be set as a value representing that an ephemeral public key field exists (e.g., 1). For example, when an ephemeral public key is not included in an authentication frame and an OAID is included in an authentication frame, the value of an ephemeral public key length field may be set as 0, and an ephemeral public key field may be set as an OAID value.

When the length of a value included in an ephemeral public key field within a PASN parameter element included in an authentication frame is detected to be greater than a value indicated by an ephemeral public key length field, a recipient (e.g., an OBSS AP) may determine that an OAID value is included in the value of an ephemeral public key field. Accordingly, among the values included in an ephemeral public key field, an ephemeral public key value corresponding to a length indicated by an ephemeral public key length field may be extracted, and an OAID value corresponding to the remaining length may be extracted.

A recipient's operation may be performed according to a verification result for an extracted OAID.

For example, when an extracted OAID corresponds to an identifier related to an MAP to which it belongs (e.g., allocated by an OBSS AP belonging to an MAP to support a modified PASN operation) or indicating an MAP, a recipient may perform a PASN authentication operation with an STA that transmits a corresponding OAID.

For example, when an extracted OAID does not correspond to an identifier related to an MAP to which it belongs (e.g., allocated by an OBSS AP belonging to an MAP to support a modified PASN operation) or indicating an MAP, a recipient may not perform a PASN authentication operation with an STA that transmits a corresponding OAID or may return a status code of reject for a PASN authentication request (or the first message).

### Embodiment 1-2

This embodiment relates to a method for including an OAID in an existing field within a PASN parameter element (see FIG. 12). Unlike Embodiment 1-1, a new field related to whether an OAID exists in a PASN parameter element may be defined and included.

As shown in the example of FIG. 16(b), a transmitter (e.g., a BSS STA) may set a value within an ephemeral public key field within a PASN parameter element included in an authentication frame as a value resulting from the concatenation of an ephemeral public key value and an OAID value according to the existing method. In this case, the value of an OAID present subfield within a control field within a PASN parameter element may be set as the first value (e.g., 1) representing that an OAID value exists within a PASN parameter element. If an OAID value does not exist within a PASN parameter element, the value of an OAID present subfield may be set as the second value (e.g., 0).

The value of an ephemeral public key length field may be set as a value corresponding to the length of an ephemeral public key according to the existing method (i.e., the length of an ephemeral public key alone before an OAID is concatenated).

Additionally or alternatively, when an OAID is included in an ephemeral public key field, the value of the group and key present subfield of a control field may be set as a value (e.g., 1) representing that an ephemeral public key field exists, and an OAID present subfield may be set as a value (e.g., 1) representing that an OAID is included within an ephemeral public key field. For example, for both a case in which an ephemeral public key is included in an authentication frame and a case in which an ephemeral public key is not included in an authentication frame, when an OAID present subfield is set as a value representing that an OAID exists, the value of the group and key present subfield of a control field may be set as a value (e.g., 1) representing that an ephemeral public key field exists. For example, when an ephemeral public key is not included in an authentication frame and an OAID is included in an authentication frame, the value of an ephemeral public key length field may be set as 0, and an ephemeral public key field may be set as an OAID value.

When the value of the OAID present subfield of a control field within a PASN parameter element included in an authentication frame is detected as the first value (or 1), a recipient (e.g., an OBSS AP) may determine that an OAID value is included in the value of an ephemeral public key field. Accordingly, among the values included in an ephemeral public key field, an ephemeral public key value corresponding to a length indicated by an ephemeral public key length field may be extracted, and an OAID value corresponding to the remaining length may be extracted.

A recipient's operation may be performed according to a verification result for an extracted OAID.

For example, when an extracted OAID corresponds to an identifier related to an MAP to which it belongs (e.g., allocated by an OBSS AP belonging to an MAP to support a modified PASN operation) or indicating an MAP, a recipient may perform a PASN authentication operation with an STA that transmits a corresponding OAID.

For example, when an extracted OAID does not correspond to an identifier related to an MAP to which it belongs (e.g., allocated by an OBSS AP belonging to an MAP to support a modified PASN operation) or indicating an MAP, a recipient may not perform a PASN authentication operation with an STA that transmits a corresponding OAID or may return a status code of reject for a PASN authentication request (or the first message).

### Embodiment 1-3

This embodiment relates to a method for including an OAID in a new field within a PASN parameter element. In addition, a new field related to whether an OAID exists in a PASN parameter element may be defined and included.

As shown in the example of FIG. 16(c), a PASN parameter element may include an OAID field (variable size), and the control field of a PASN parameter element may include an OAID present subfield. In the example of FIG. 16(c), the position and length of an OAID field are exemplary, and the scope of the present disclosure is not limited thereby.

A transmitter (e.g., a BSS STA) may set an OAID field within a PASN parameter element included in an authentication frame as the value of an OAID. In this case, the value of an OAID present subfield within a control field within a PASN parameter element may be set as the first value (e.g., 1) representing that an OAID field exists within a PASN parameter element. If an OAID field does not exist within a PASN parameter element, the value of an OAID present subfield may be set as the second value (e.g., 0).

Unlike Embodiments 1-1 and 1-2, in Embodiment 1-3, a group and key present subfield within a control field, an ephemeral public key length field and an ephemeral public key field may be set independently of whether an OAID exists and an OAID value.

When the value of the OAID present subfield of a control field within a PASN parameter element included in an authentication frame is detected as the first value (or 1), a recipient (e.g., an OBSS AP) may extract an OAID value from an OAID field.

A recipient's operation may be performed according to a verification result for an extracted OAID.

For example, when an extracted OAID corresponds to an identifier related to an MAP to which it belongs (e.g., allocated by an OBSS AP belonging to an MAP to support a modified PASN operation) or indicating an MAP, a recipient may perform a PASN authentication operation with an STA that transmits a corresponding OAID.

For example, when an extracted OAID does not correspond to an identifier related to an MAP to which it belongs (e.g., allocated by an OBSS AP belonging to an MAP to support a modified PASN operation) or indicating an MAP, a recipient may not perform a PASN authentication operation with an STA that transmits a corresponding OAID or may return a status code of reject for a PASN authentication request (or the first message).

Here, verification for a corresponding OAID may be performed not only when the value of a group and key present subfield within a control field is 1, but also when the value of a group and key present subfield is 0 and the value of a comeback information present subfield is 1. In addition, OAID verification may be performed even when only the value of an OAID present subfield within a control field is 1.

### Embodiment 2

This embodiment relates to an OAID-based key derivation method in a PASN authentication operation.

An existing PTK may be generated as follows.
PTK = KDF-HASH-NNN (PMK, "PASN PTK Derivation", SPA ∥ BSSID ∥ DHss)

KDF-HASH-NNN() is a key derivation function that uses a hash algorithm defined for a base AKMP. When there is no base AKMP, a hash algorithm may be selected based on a pairwise cipher suite provided in an RSNE provided in the second PASN frame from an AP.

NNN is bits required for a KCK, a TK and a KDK depending on whether a pairwise cipher and a KDK are derived.

A PMK is a pairwise master key for a base AKMP. When an AKMP is other than a PASN AKMP, a pairwise master key derived by using a base AKMP method may be set as a PMK. When a base AKMP is PASN authentication that mutual authentication is not performed on a non-RSN, a PMK may be set as "PMKz" to which 28 zeros are padded (here, the contents within quotation marks refer to a string).

"PASN PTK Derivation" refers to a corresponding string.

An SPA corresponds to the MAC address of a non-AP STA. For example, a non-AP STA may correspond to the transmitter of the first/third PASN frame or the recipient of the second PASN frame.

A BSSID corresponds to the BSSID of an AP (or an OBSS AP) (or the MAC address of an AP). For example, an AP (an OBSS AP) may correspond to the recipient of the first/third PASN frame or the transmitter of the second PASN frame.

DHSS is a shared secret derived from an ephemeral key exchange and may be encoded as an octet-sized string.

In the present disclosure, when an OAID is applied to PASN authentication, an OAID-based key derivation method is newly defined.

For example, in an OAID-based PASN, a PTK related to transmission and reception between an STA (a BSS STA) and an AP (an OBSS AP) may be generated as follows.
PTK = KDF-HASH-NNN (PMK', "PASN PTK Derivation", SPA ∥ BSSID ∥ DHss)

For example, PMK' may be defined to have a predetermined length (e.g., 256 bits).

For example, when PASN authentication is performed without a base AKMP, PMK' may be set as a string consisting of an OAID and zero(s) (i.e., PMK' = OAID + 0(s)).

Additionally or alternatively, when PASN authentication is performed without a base AKMP (or when a base AKMP is PASN authentication that mutual authentication is not performed on a non-RSN), PMK' may be set as a string consisting of "PMKz", an OAID and zero(s) (i.e., PMK' = "PMKz" + OAID + 0(s)).

Additionally or alternatively, when a base AKMP is not PASN authentication, a result value that an OAID is concatenated with the pairwise master key of a base AKMP may be set as PMK' (i.e., PMK' = pairwise master key of Base AKMP + OAID).

Unlike the existing WLAN system where a PASN operation is performed by an unassociated STA, since a modified PASN operation according to the present disclosure performs PASN with the second AP based on an OAID provided in advance while already being associated with the first AP, an STA may perform a procedure such as requesting data transmission and reception channel information with the second AP without completing association with another second AP, so an STA's rapid and efficient movement between APs may be supported.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless local area network (WLAN) system, the method comprising:
transmitting, to a second STA, a first message including a pre-association security negotiation (PASN) parameter element, wherein the PASN parameter element includes an identifier for the first STA; and
receiving, from the second STA, a second message transmitted based on the identifier satisfying a predetermined condition.

2. The method of claim 1, wherein:
the identifier is included in an ephemeral public key field of the PASN parameter element.

3. The method of claim 2, wherein:
the ephemeral public key field of the PASN parameter element includes a value obtained by concatenating an ephemeral public key value and the identifier value.

4. The method of claim 2, wherein:
an ephemeral public key length field of the PASN parameter element is set as a value corresponding to a length of the ephemeral public key.

5. The method of claim 2, wherein:
a control field of the PASN parameter element includes a subfield indicating whether the identifier is included in the ephemeral public key field.

6. The method of claim 1, wherein:
the identifier is included in an identifier field other than an ephemeral public key field of the PASN parameter element.

7. The method of claim 6, wherein:
a control field of the PASN parameter element includes a subfield indicating whether the identifier field exists.

8. The method of claim 1, wherein:
a pairwise transient key (PTK) related to a transmission and a reception between the first STA and the second STA is derived based on the identifier.

9. The method of claim 8, wherein:
a pairwise master key (PMK) based on the PTK is composed of bits of a predetermined length including the identifier value and at least one 0 (zero).

10. The method of claim 8, wherein:
PMK based on the PTK is composed of bits of a predetermined length including "PMKz", the identifier value, and at least one 0 (zero).

11. The method of claim 8, wherein:
PMK based on the PTK is composed of bits of a predetermined length including a pairwise master key of a base authentication and key management protocol (AKMP) and the identifier value.

12. The method of claim 1, wherein:
the predetermined condition includes that the identifier is related to a multi-access point (AP) to which the second STA belongs.

13. The method of claim 1, wherein:
the identifier is provided in advance to the first STA through a third STA with which the first STA is associated.

14. The method of claim 13, wherein:
the second STA and the third STA are APs included in one multi-AP set.

15. The method of claim 1, wherein:
the identifier is allocated by the second STA.

16. The method of claim 1, wherein:
the identifier is an overlapping basic service set (OBSS) association ID (OAID).

17. The method of claim 1, wherein:
the first STA is a non-AP STA, and
the second STA is an AP which is not associated with the first STA.

18. A first station (STA) device in a wireless local area network (WLAN) system, the device comprising:
at least one transceiver; and
at least one processor connected to the at least one transceiver,
wherein the at least one processor is configured to:
transmit, through the at least one transceiver, to a second STA, a first message including a pre-association security negotiation (PASN) parameter element, wherein the PASN parameter element includes an identifier for the first STA; and
receive, through the at least one transceiver, from the second STA, a second message transmitted based on the identifier satisfying a predetermined condition.

19. A method performed by a second station (STA) in a wireless local area network (WLAN) system, the method comprising:
receiving, from a first STA, a first message including a pre-association security negotiation (PASN) parameter element, wherein the PASN parameter element includes an identifier for the first STA; and
based on the identifier satisfying a predetermined condition, transmitting a second message to the first STA.

20. A second station (STA) device in a wireless local area network (WLAN) system, the derive comprising:
at least one transceiver; and
at least one processor connected to the at least one transceiver,
wherein the at least one processor is configured to:
receive, through the at least one transceiver, from a first STA, a first message including a pre-association security negotiation (PASN) parameter element, wherein the PASN parameter element includes an identifier for the first STA; and
based on the identifier satisfying a predetermined condition, transmit, through the at least one transceiver, a second message to the first STA.

21. A processing device configured to control a station (STA) in a wireless local area network (WLAN) system, the processing device comprising:
at least one processor; and
at least one computer memory operably connected to the at least one processor, and based on being executed by the at least one processor, storing instructions for performing a method according to Claim 1.

22. At least one non-transitory computer-readable medium storing at least one instruction, wherein:
the at least one instruction controls a device to perform a method according to Claim 1 in a wireless local area network (WLAN) system by being executed by at least one processor.
